# EUROPEAN PATENT SPECIFICATION

(11) **EP 3 366 933 B1**
(45) Date of publication and mention of the grant of the patent: **22.04.2020**
(21) Application number: 17196177.4
(22) Date of filing: 12.10.2017
(51) Int. Cl.: F16B 25/00, F16B 25/10

(54) **SCREW**
SCHRAUBE
VIS

(43) Date of publication of application: 29.08.2018
(73) Proprietor: Taiwan Shan Yin International Co., Ltd., Kaohsiung City 806 (TW)
(72) Inventor: Su, Kou-Tsair, Kaohsiung City 806 (TW); Su, Yu-Jung, Kaohsiung City 806 (TW)
(74) Representative: Cabinet Chaillot

(56) References cited:
- US-A- 5 015 134
- US-A1- 2006 140 738

## Description

### BACKGROUND OF THE INVENTION

### 1. Field of the Invention

This invention relates to a screw and relates particularly to a screw capable of increasing the screwing efficiency.

### 2. Description of the Related Art

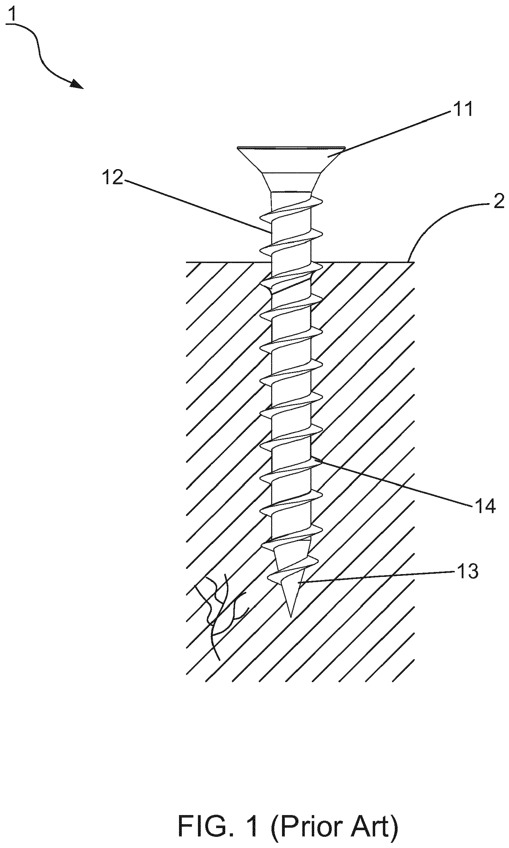

Referring to Fig.**1**, a conventional fastener **1** comprises a head **11,** a shank **12** extending downwards from the head **11,** a drilling portion **13** connected to an end of the shank **12,** and a threaded section **14** spirally disposed on the shank **12.** During the screwing operation, a driving tool (not shown) is applied to rotate the head **11** to allow the drilling portion **13** which is rendered to touch a surface of an object **2** to start drilling. Simultaneously, the drilling portion **13** drives the threaded section **14** to move downwards. When the threaded section **14** contacts the object **2,** the threaded section **14** starts cutting the object **2** to thread the shank **12** into the object **2** to complete the screwing operation of the conventional fastener **1.**

During the screwing operation of the conventional fastener **1,** the drilling portion **13** is rendered to press the object **2** firstly to carry out the movement of the threaded section **14.** After the threaded section **14** reaches the object **2,** the threaded section **14** executes the cutting action of the object **2.** However, the threaded section **14** is unable to break fibers of the object **2.** In other words, the fibers of the object **2** cannot be severed effectively by the threaded section **14** to result in the entanglement of the fibers around the shank **12.** Meanwhile, the conventional fastener **1** keeps pressing the fibers while screwing into the object **2** to result in the enhanced drilling resistance and worsened screwing efficiency. Moreover, cut chips produced by cutting the object **2** are excluded through the thread **14** inefficiently and further accumulate in the object **2.** The accumulated cut chips cause the laborious screwing operation when the conventional fastener **1** keeps screwing into the object **2.** Furthermore, the object **2** may crack when the conventional fastener **1** keeps moving downwards and squeezing the accumulated cut chips. Thus, the conventional fastener **1** still needs to be improved. US2006/140738 A1 discloses a screw according to the preamble of claim 1.

### SUMMARY OF THE INVENTION

The object of this invention is to provide a screw capable of reducing the drilling resistance to enhance the screwing efficiency.

The screw of this invention comprises a head, a shank extending downwards therefrom, a drilling portion connected to an end of the shank and opposite to the head, a first threaded section spirally disposed around the shank, and a leading threaded section spirally extending upwards from the drilling portion. A disconnection of the first threaded section and the leading threaded section defines a valley. At least one cutting unit extending upwards from the valley is connected to the first threaded section and the leading threaded section respectively. A protruding height of the cutting unit is smaller than a distance defined from the shank to an outermost edge of the first threaded section. Hence, during the beginning of the screwing operation, the leading threaded section cuts an object roughly when the drilling portion drills the object simultaneously. The cutting unit further positions and severs fibers which are not cut by the leading threaded section entirely. Therefore, the fibers will not hinder the screw from threading into the object. The friction between the first threaded section and the object is reduced effectively when the first threaded section continues cutting. Meanwhile, the fibers will not entwine around the shank to avoid slow drilling speed. Further, cut chips can be accommodated and excluded through the valley effectively to attain the smooth evacuation of the cut chips and enhance the accommodation effect of the cut chips. Whereby the drilling resistance is reduced and the engagement of the screw and the object is enhanced to increase the screwing efficiency.

Preferably, there is at least one auxiliary cutting unit projecting from the valley.

Preferably, the shank has a second threaded section spiraled thereon. The second shank has a helical direction opposite to a helical direction of the first threaded section.

Preferably, the drilling portion has an auxiliary threaded section extending from the drilling portion and situated between the leading threaded section. The auxiliary threaded section has a helical direction opposite to a helical direction of the leading threaded section.

Preferably, the cutting unit has a positioning wall projecting outwards from the valley, a guiding wall connected to the positioning wall, and a cutting edge formed at a connection of the positioning wall and the guiding wall.

Preferably, the positioning wall has a vertical surface. The guiding wall has a surface slanting from the cutting edge to the valley.

Preferably, the first threaded section ends at a first end. The leading threaded section ends at a second end. Two ends of the cutting unit are respectively connected to the first end and the second end.

### BRIEF DESCRIPTION OF THE DRAWINGS

Fig. **1** is a schematic view showing a conventional fastener;
Fig. **2** is a schematic view showing a first preferred embodiment of this invention;
Fig. **2A** is an enlarged view showing a partial element of Fig. 2;
Fig. **3** is a bottom plan view as seen along the line A-A of Fig. 2;
Fig. **3A** is an enlarged view showing a partial element of Fig. 3;
Fig. **4** is a schematic view showing the screwing operation of the first preferred embodiment;
Fig. **5** is a schematic view showing a second preferred embodiment of this invention characterized by an auxiliary cutting unit;
Fig. **6** is a schematic view showing a third preferred embodiment of this invention characterized by a second threaded section;
Fig. **7** is a schematic view showing a fourth preferred embodiment of this invention characterized in that an auxiliary cutting unit connected to a second threaded section;
Fig. **8** is a schematic view showing a fifth preferred embodiment of this invention characterized by an auxiliary threaded section;
Fig. **9** is a schematic view showing a sixth preferred embodiment of this invention characterized in that an auxiliary threaded section connected to an auxiliary cutting unit;
Fig. **10** is a schematic view showing a seventh preferred embodiment of this invention characterized in that an auxiliary threaded section and a second threaded section are disconnected; and
Fig. **11** is a schematic view showing an eighth preferred embodiment of this invention characterized in that an auxiliary threaded section, an auxiliary cutting unit connected thereto and a second threaded section connected to an end of the auxiliary cutting unit.

### DETAILED DESCRIPTION OF THE PREFERRED EMBODIMENTS

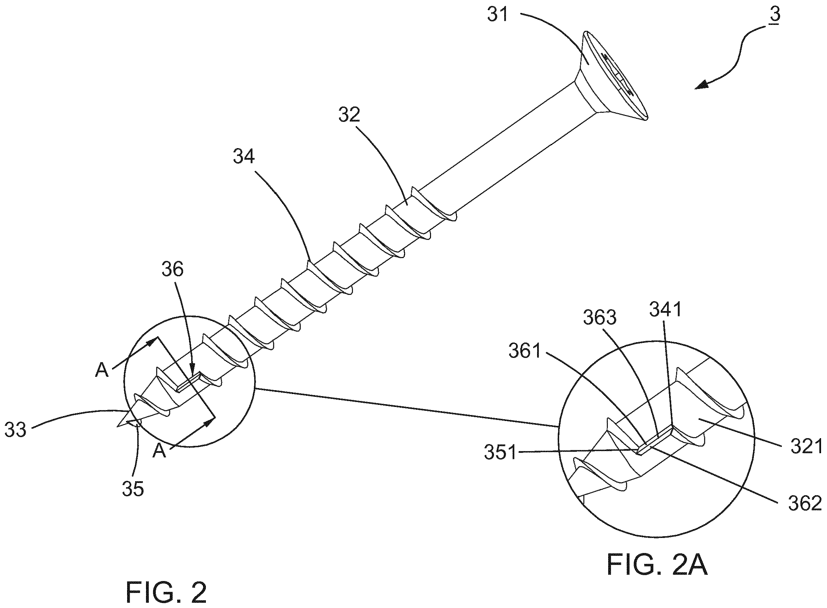

Referring to Fig. **2****,** a first preferred embodiment of a screw **3** of this invention is disclosed. The screw **3** includes a head **31,** a shank **32** extending downwards from the head **31,** a drilling portion **33** fitted at an end of the shank **32** and opposite to the head **31,** a first threaded section **34** spiraled on the shank **32,** and a leading threaded section **35** helically extending upwards from the drilling portion **33.** The first threaded section **34** and the leading threaded section **35** are separated from each other to define a valley **321** between the first threaded section **34** and the leading threaded section **35.** Referring to Fig. **2A****,** in the preferred embodiments, the first threaded section **34** is continuously disposed around the shank **32** and terminates at a first end **341,** and the leading threaded section **35** is helically disposed on the length of the drilling portion **33** and terminates at a second end **351.** The second end **351** may be located on the drilling portion **33** or on the shank **32.** The valley **321** is formed between the ends **341**, **351** of the first threaded section **34** and the leading threaded section **35.** In other words, the valley **321** occupies a space between a last convolution of the first threaded section **34** and a last convolution of the leading threaded section **35.** Certainly, the valley **321** may extend to cover parts of the drilling portion **33.** Or, the valley **321** can be elongated by adjusting the locations of the first end **341** and the second end **351** to allow the valley **321** to accommodate more cut chips.

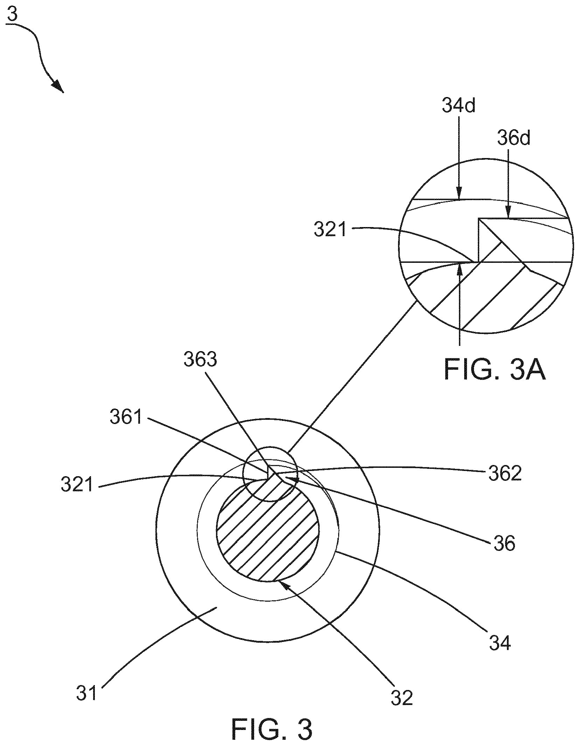

Referring to Fig. **2A****,** at least one cutting unit **36** projects from the valley **321.** Two ends of the cutting unit **36** are respectively connected to the first end **341** of the first threaded section **34** and the second end **351** of the leading threaded section **35.** Referring to Fig. **3** and Fig. **3A****,** a protruding height **36d** of the cutting unit **36** is smaller than a distance **34d** defined from the shank **32** to an outermost edge of the first threaded section **34.** Meanwhile, in the preferred embodiments, the cutting unit **36** has a positioning wall **361** protruding outwards from the valley **321,** a guiding wall **362** connected to the positioning wall **361,** and a cutting edge **363** formed at a convergence of the positioning wall **361** and the guiding wall **362.** The positioning wall **361** has a vertical surface. The guiding wall has a surface inclining from the cutting edge **363** to the valley **321.**

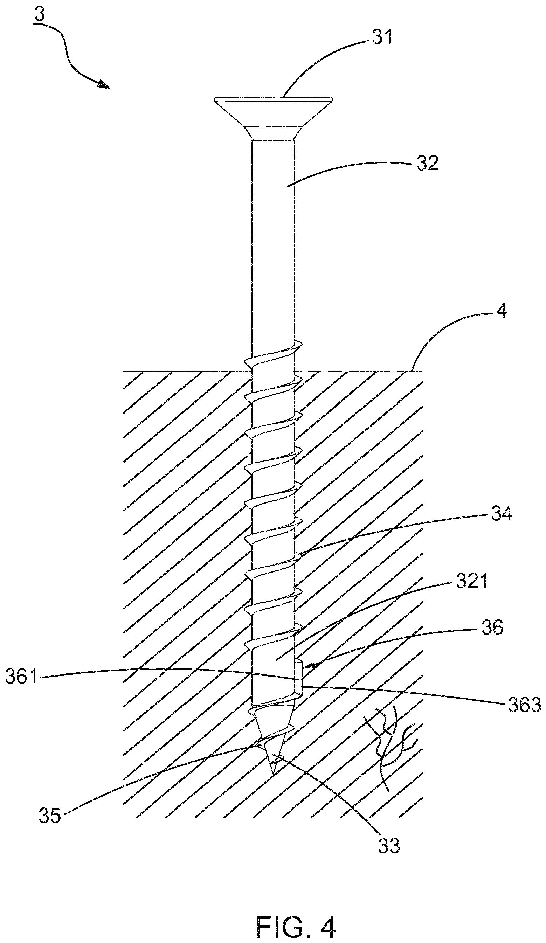

Referring to Fig. **2** to Fig. **4****,** during the screwing operation of the screw **3,** the drilling portion **33** is positioned against to an object **4** firstly. Then, the head **31** receives the rotation force from a driving tool (not shown) to carry out the drilling action of the drilling portion **33** into the object **4** and synchronously drive the leading threaded section **35** to cut the object **4.** Hence, the leading threaded section **35** assists the drilling portion **33** in reaming and cutting the object **4** at the beginning of the screwing operation to allow the screw **3** to thread into the object **4** quickly. Besides, the leading threaded section **35** can cut fibers of the object **4** roughly while threading into the object **4** gradually to prevent the drilling portion **33** from being entwined by the fibers. When the screw **3** keeps threading into the object **4** to allow the cutting unit **36** to contact the object **4,** the cutting unit **36** continues to cut the object **4** thoroughly. The positioning wall **361** presses and positions the remained fibers which are not severed by the leading threaded section **35** to allow the cutting edge **363** to break the fibers completely. The severed fibers are then evacuated through the guiding wall **362** to be accommodated in the valley **321.** Further, the valley **321** assists in accelerating the evacuation of the cut chips through the first threaded section **34** to the outside. Because the leading threaded section **35** and the cutting unit **36** execute the cutting action of the object **4** sequentially to attain the double cutting effect, the fibers are severed effectively. Thus, the fibers will not hinder the screw **3** from threading into the object **4,** thereby facilitating the screwing operation, increasing the screwing speed, and reducing the drilling resistance caused by the accumulated cut chips. Moreover, the cut chips can be evacuated along the valley **321** through the first threaded section **34** to the outside effectively, thereby achieving the smooth evacuation and preferable accommodation effect of the cut chips. Furthermore, the protruding height **36d** is smaller than the distance **34d** to prevent the cutting unit **36** from cutting the fibers of the object **4** beyond the limit. Meanwhile, the cutting unit **36** can press the fibers properly while threading into the object **4** to loosen the fibers and ream the object **4,** thereby facilitating the following cutting and threading actions of the first threaded section **34.** Hence, the screw **3** engages with the object **4** tightly. The screw **3** will not snap and the first threaded section **34** will not break during the screwing operation. Thus, the drilling resistance is reduced effectively. The cut chips are excluded smoothly to avoid slow drilling speed. Whereby the screwing efficiency is increased.

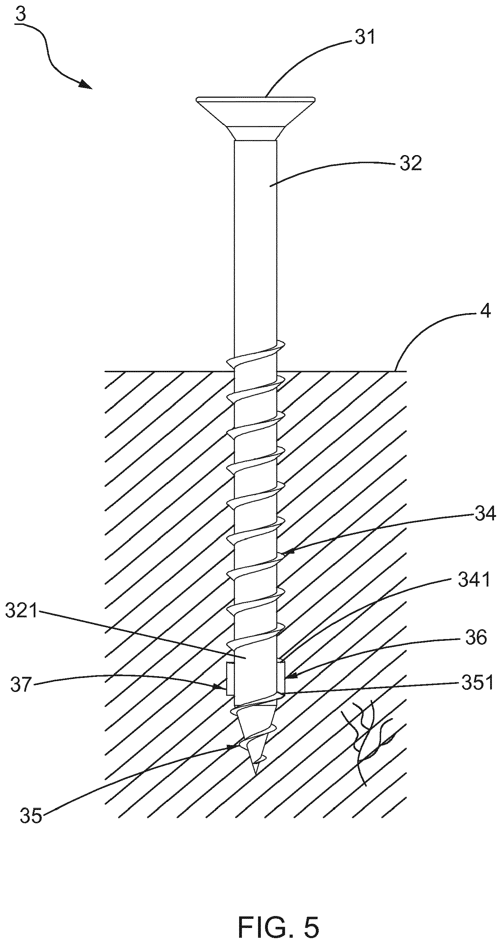

Referring to Fig. **5** shows a second preferred embodiment of the screw **3** of this invention. The correlated elements and the concatenation of elements, the operation and objectives of the second preferred embodiment are the same as those of the first preferred embodiment. This embodiment is characterized in that at least one auxiliary cutting unit **37** projects from the valley **321.** Two ends of the cutting unit **36** are still connected to the first end **341** and the second end **351** respectively. Contrarily, two ends of the auxiliary cutting unit **37** are disconnected from the first end **341** and the second end **351.** Hence, the auxiliary cutting unit **37** assists the cutting unit **36** in cutting and reaming the object **4** at the beginning of the screwing operation, thereby accelerating the screwing operation. Thus, the screwing operation is facilitated. The screwing speed is increased. The drilling resistance is decreased greatly. Meanwhile, the friction between the screw **3** and the object **4** is reduced greatly to attain the smooth and fast screwing operation. Further, the engagement of the screw **3** and the object **4** is enhanced to increase the screwing efficiency.

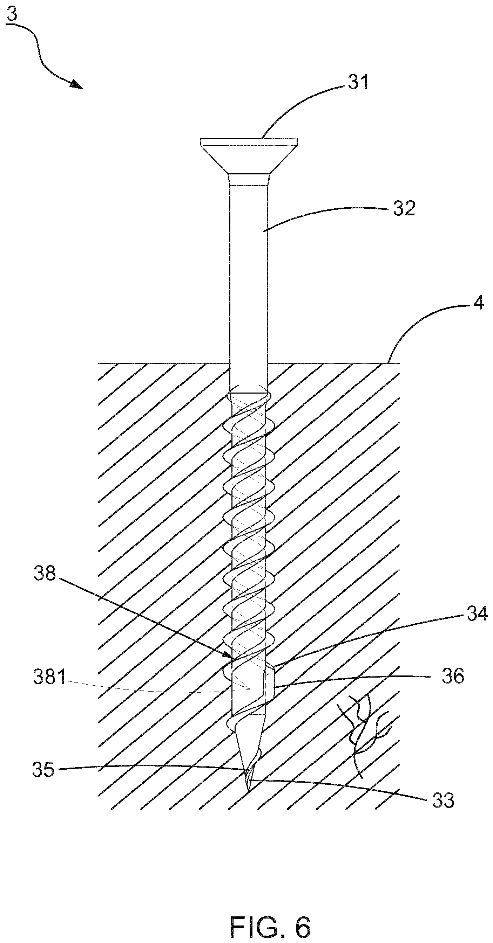

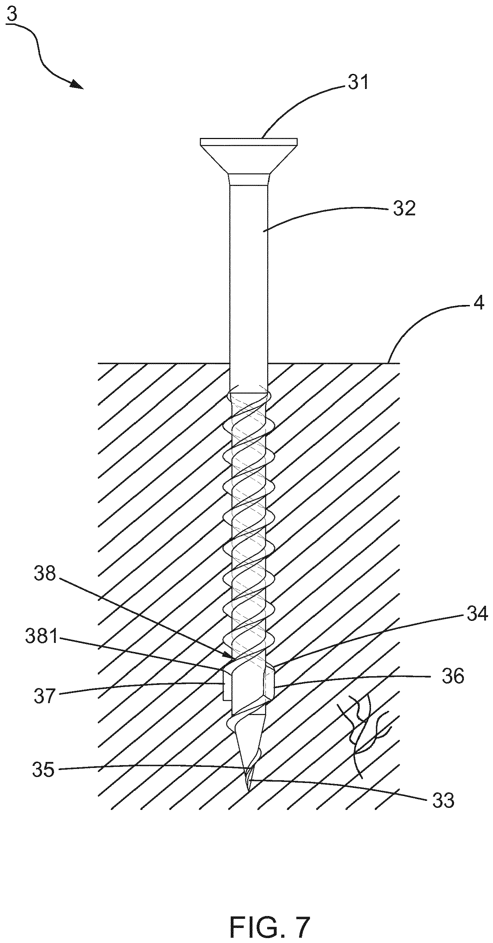

Referring to Fig. **6** shows a third preferred embodiment of the screw **3** of this invention. The correlated elements and the concatenation of elements, the operation and objectives of the third preferred embodiment are the same as those of the first preferred embodiment. This embodiment is characterized in that the shank **32** has a second threaded section **38** helically formed on the shank **32** and situated between the first threaded section **34.** The second threaded section **38** has a helical direction different from a helical direction of the first threaded section **34.** In the preferred embodiments, the second threaded section **38** is helically disposed around the shank **32** and terminates at a third end **381.** Meanwhile, the second threaded section **38** can be applied to different preferred embodiments. For example, the second threaded section **38** can combine with the structure of the aforementioned second preferred embodiment and then the third end **381** of the second threaded section **38** connects to one end of the auxiliary cutting unit **37** to construct a fourth preferred embodiment shown in Fig. **7****.** Hence, the set of alternating threaded sections, namely the first threaded section **34** alternating with the second threaded section **38** accelerates the drilling and cutting actions and increases the evacuation of the cut chips, thereby reducing the drilling resistance greatly, preventing the cut chips from accumulating in the object **4** and achieving the smooth screwing operation. Further, the engagement of the screw **3** and the object **4** is enhanced to increase screwing efficiency.

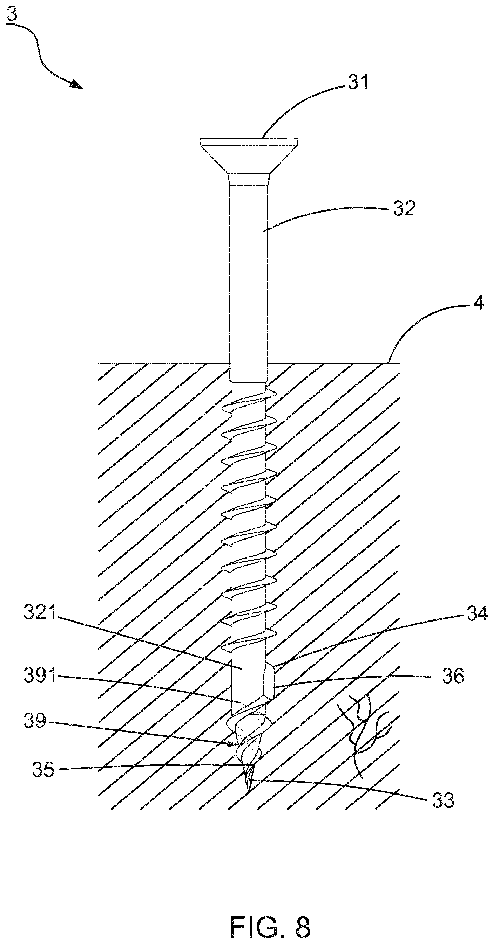

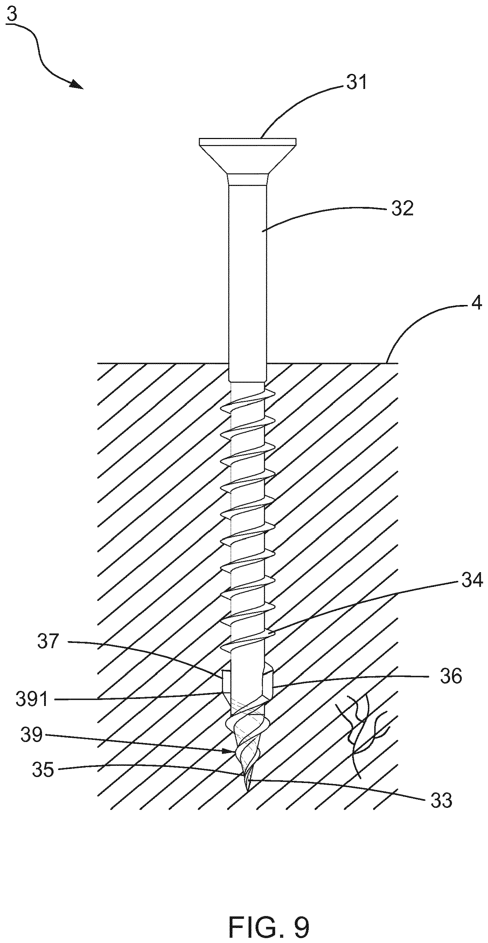

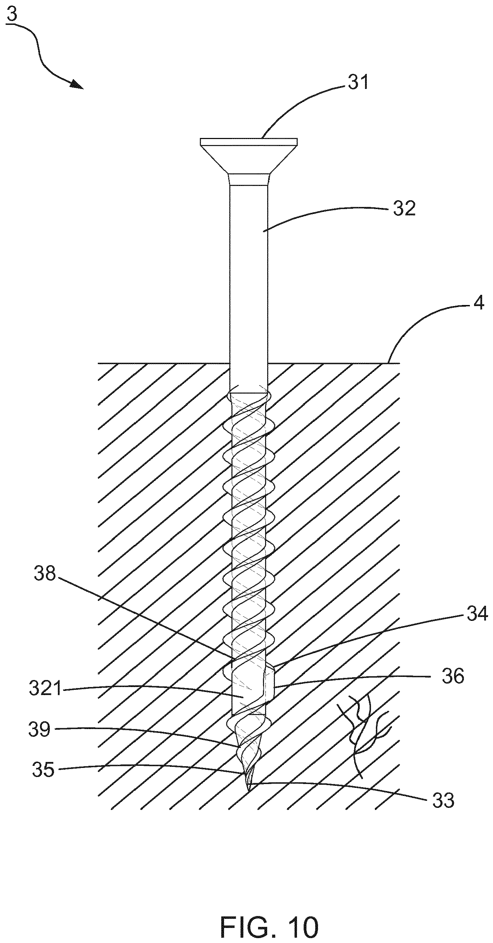

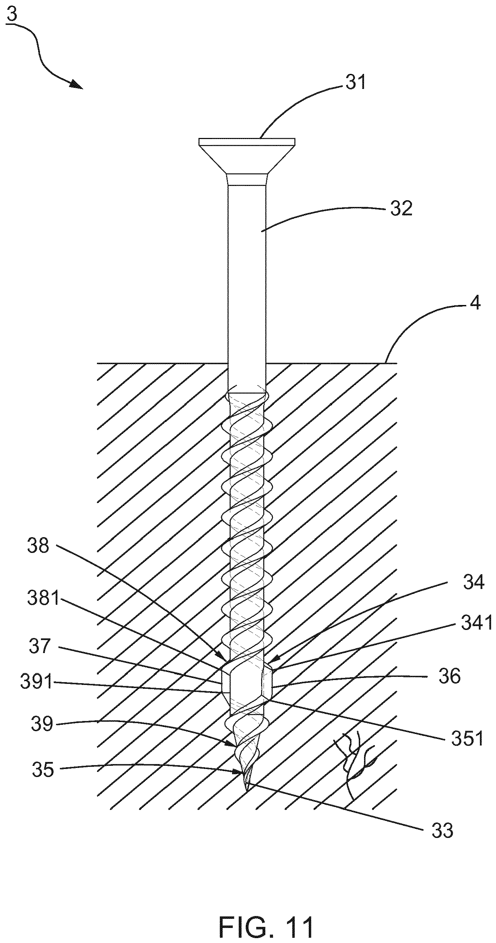

Referring to Fig. **8** shows a fifth preferred embodiment of the screw **3** of this invention. The correlated elements and the concatenation of elements, the operation and objectives of the fifth preferred embodiment are the same as those of the first preferred embodiment. This embodiment is characterized in that the drilling portion **33** has an auxiliary threaded section **39** extending upwards from the drilling portion **33** and situated between the leading threaded section **35.** The auxiliary threaded section **39** has a helical direction different from a helical direction of the leading threaded section **35.** In the preferred embodiments, the auxiliary threaded section **39** is helically disposed on the length of the drilling portion **33** and terminates at a fourth end **391.** The fourth end **391** may be located on the drilling portion **33** or on the shank **32.** Meanwhile, the auxiliary threaded section **39** can be applied to different preferred embodiments. For example, the auxiliary threaded section **39** can combine with the structure of the aforementioned second preferred embodiment and then the fourth end **391** of the auxiliary threaded section **39** connects to one end of the auxiliary cutting unit **37** to construct a sixth preferred embodiment shown in Fig. **9****.** It is also possible that the auxiliary threaded section **39** combines with the structure of the aforementioned third preferred embodiment to construct a seventh preferred embodiment shown in Fig. **10** wherein there are two sets of alternating threaded sections, namely the first threaded section **34** alternating with the second threaded section **38** and the leading threaded section **35** alternating with the auxiliary threaded section **39.** Alternatively, as shown in an eighth preferred embodiment shown in Fig. **11****,** if there are two sets of alternating threaded sections, namely the first threaded section **34** alternating with the second threaded section **38** and the leading threaded section **35** alternating with the auxiliary threaded section **39,** two ends of the cutting unit **36** are respectively connected to the first end **341** of the first threaded section **34** and the second end **351** of the leading threaded section **35,** and two ends of the auxiliary cutting unit **37** are respectively connected to the third end **381** of the second threaded section **38** and the fourth end **391** of the auxiliary threaded section **39.** Hence, the set of alternating threaded sections, namely the leading threaded section **35** alternating with the auxiliary threaded section **39** assists the drilling portion **33** in reaming and cutting the object **4** to increase the screwing speed of threading into the object **4** and reduce the drilling resistance at the beginning of the screwing operation. Whereby the screwing operation is facilitated and the tight engagement of the screw **3** and the object **4** is attained to achieve the better screwing efficiency.

To sum up, the screw of this invention takes advantages of the leading threaded section and at least one cutting unit which is connected to the first threaded section and the leading threaded section respectively to increase the screwing efficiency. The leading threaded section assists the drilling portion in cutting the fibers to prevent the drilling portion from being entwined by the fibers and reduce the drilling resistance at the beginning of the screwing operation. Meanwhile, the cutting unit can position and sever the fibers which are not cut by the leading threaded section effectively to prevent the screwing operation from being hindered caused by the entanglement of the fibers around the shank. Thus, the friction between the screw and the object is reduced to accelerate the screwing operation. The screw engages with the object firmly and the drilling resistance is reduced greatly. Further, the cut chips are accommodated and evacuated through the valley and the first threaded section smoothly. Whereby the preferable screwing efficiency is attained.

While the embodiments of this invention are shown and described, it is understood that further variations and modifications may be made without departing from the scope of this invention.

## Claims

1. A screw (3) comprising a head (31), a shank (32) extending downwards from said head (31), a drilling portion (33) connected to an end of said shank (32) opposite to said head (31), and a first threaded section (34) spirally formed around said shank (32);
**characterized in that** a leading threaded section (35) extends spirally from said drilling portion (33) toward said first threaded section (34), said first threaded section (34) and said leading threaded section (35) being spaced one from the other to form a valley (321) between said first threaded section (34) and said leading threaded section (35), at least one cutting unit (36) protruding from said valley (321), said at least one cutting unit (36) having a cutting edge (363) at a protruding height (36d) thereof, two ends of said at least one cutting unit (36) being respectively connected to said first threaded section (34) and said leading threaded section (35), said protruding height (36d) of said at least one cutting unit (36) being smaller than a distance (34d) defined from said shank (32) to an outermost edge of said first threaded section (34).

2. The screw (3) as claimed in claim 1, further comprising at least one auxiliary cutting unit (37) protruding from said valley (321) .

3. The screw (3) as claimed in claim 1, further comprising a second threaded section (38) spirally disposed on said shank (32) and located between said first threaded section (34), said second threaded section (38) having a helical direction different from a helical direction of said first threaded section (34).

4. The screw (3) as claimed in claim 2, further comprising a second threaded section (38) spirally disposed on said shank (32) and located between said first threaded section (34), said second threaded section (38) having a helical direction different from a helical direction of said first threaded section (34), said second threaded section (38) being connected to said at least one auxiliary cutting unit (37).

5. The screw (3) as claimed in claim 1, further comprising an auxiliary threaded section (39) extending spirally from said drilling portion (33) toward said first threaded section (34) and located between said leading threaded section (35), said auxiliary threaded section (39) having a helical direction different from a helical direction of said leading threaded section (35).

6. The screw (3) as claimed in claim 2, further comprising an auxiliary threaded section (39) extending spirally from said drilling portion (33) toward said first threaded section (34) and located between said leading threaded section (35), said auxiliary threaded section (39) having a helical direction different from a helical direction of said leading threaded section (35), said auxiliary threaded section (39) being connected to said at least one auxiliary cutting unit (37).

7. The screw (3) as claimed in claim 3, further comprising an auxiliary threaded section (39) extending spirally from said drilling portion (33) toward said first threaded section (34) and located between said leading threaded section (35), said auxiliary threaded section (39) having a helical direction different from a helical direction of said leading threaded section (35).

8. The screw (3) as claimed in claim 4, further comprising an auxiliary threaded section (39) extending spirally from said drilling portion (33) toward said first threaded section (34) and located between said leading threaded section (35), said auxiliary threaded section (39) having a helical direction different from a helical direction of said leading threaded section (35), two ends of said at least one auxiliary cutting unit (37) being respectively connected to said second threaded section (38) and said auxiliary threaded section (39).

9. The screw (3) as claimed in claim 1, wherein said at least one cutting unit (36) has a positioning wall (361) extending upwards from said valley (321) and a guiding wall (362) connected to said positioning wall (361), said cutting edge (363) of said at least one cutting unit (36) being formed at a convergence of said positioning wall (361) and said guiding wall (362).

10. The screw (3) as claimed in claim 9, wherein said positioning wall (361) has a vertical surface, said guiding wall (362) having a surface sloping from said cutting edge (363) to said valley (321) .

11. The screw (3) as claimed in claim 1, wherein said first threaded section (34) terminates at a first end (341), said leading threaded section (35) terminating at a second end (351), said two ends of said at least one cutting unit (36) being respectively connected to said first end (341) and said second end (351).

12. The screw (3) as claimed in claim 8, wherein said second threaded section (38) terminates at a third end (381), said auxiliary threaded section (39) terminating at a fourth end (391), said two ends of said at least one auxiliary cutting unit (37) being respectively connected to said third end (381) and said fourth end (391) .

## Patentansprüche

1. Schraube (3), umfassend einen Kopf (31),einen Schaft (32), der sich von dem Kopf (31) nach unten erstreckt, einen Bohrabschnitt (33), der mit einem Ende des Schafts (32) gegenüber dem Kopf (31) verbunden ist, und einen ersten gewindegeschnittenen Abschnitt (34), der spiralförmig um den Schaft (32) gebildet ist,
**dadurch gekennzeichnet, dass** sich der vordere gewindegeschnittene Abschnitt (35) spiralförmig von dem Bohrabschnitt (33) hin zu dem ersten gewindegeschnittenen Abschnitt (34) erstreckt, wobei der erste gewindegeschnittene Abschnitt (34) und der vordere gewindegeschnittene Abschnitt (35) voneinander beabstandet sind, um ein Tal (321) zwischen dem ersten gewindegeschnittenen Abschnitt (34) und dem vorderen gewindegeschnittenen Abschnitt (35) zu bilden, mindestens eine Schneideeinheit (36), die von dem Tal (321) hervorsteht, wobei die mindestens eine Schneideeinheit (36) eine Schneidekante (363) an einer hervorstehenden Höhe (36d) davon aufweist, wobei zwei Enden der mindestens einen Schneideeinheit (36) jeweils mit dem ersten gewindegeschnittenen Abschnitt (34) und dem vorderen gewindegeschnittenen Abschnitt (35) verbunden sind, wobei die vorstehende Höhe (36d) der mindestens einen Schneideeinheit (36) kleiner als ein Abstand (34d) ist,der von dem Schaft (32) zu einer äußersten Kante des ersten gewindegeschnittenen Abschnitts (34) definiert ist.

2. Schraube (3) nach Anspruch 1, weiter umfassend mindestens eine zusätzliche Schneideeinheit (37), die von dem Tal (321) hervorsteht.

3. Schraube (3) nach Anspruch 1, weiter umfassend einen zweiten gewindegeschnittenen Abschnitt (38), der spiralförmig auf dem Schaft (32) angeordnet ist und sich zwischen dem ersten gewindegeschnittenen Abschnitt (34) befindet, wobei der zweite gewindegeschnittene Abschnitt (38) eine Spiralrichtung aufweist, die verschieden von einer Spiralrichtung des ersten gewindegeschnittenen Abschnitts (34) ist.

4. Schraube (3) nach Anspruch 2, weiter umfassend einen zweiten gewindegeschnittenen Abschnitt (38), der spiralförmig auf dem Schaft (32) angeordnet ist und sich zwischen dem ersten gewindegeschnittenen Abschnitt (34) befindet, wobei der zweite gewindegeschnittene Abschnitt (38) eine Spiralrichtung aufweist, die verschieden von einer Spiralrichtung des ersten gewindegeschnittenen Abschnitts (34) ist, wobei der zweite gewindegeschnittene Abschnitt (38) mit der mindestens einen zusätzlichen Schneideeinheit (37) verbunden ist.

5. Schraube (3) nach Anspruch 1, weiter umfassend einen zusätzlichen gewindegeschnittenen Abschnitt (39), der sich spiralförmig von dem Bohrabschnitt (33) hin zu dem ersten gewindegeschnittenen Abschnitt (34) erstreckt und sich zwischen dem vorderen gewindegeschnittenen Abschnitt (35) befindet, wobei der zusätzliche gewindegeschnittene Abschnitt (39) eine Spiralrichtung aufweist, die verschieden von einer Spiralrichtung des vorderen gewindegeschnittenen Abschnitts (35) ist.

6. Schraube (3) nach Anspruch 2, weiter umfassend einen zusätzlichen gewindegeschnittenen Abschnitt (39), der sich spiralförmig von dem Bohrabschnitt (33) hin zu dem ersten gewindegeschnittenen Abschnitt (34) erstreckt und sich zwischen dem vorderen gewindegeschnittenen Abschnitt (35) befindet, wobei der zusätzliche gewindegeschnittene Abbschnitt (39) eine Spiralrichtung aufweist,die verschieden von einer Spiralrichtung des vorderen gewindegeschnittenen Abschnitts (35) ist, wobei der zusätzliche gewindegeschnittene Abschnitt (39) mit der mindestens einen zusätzlichen Schneideeinheit (37) verbunden ist.

7. Schraube (3) nach Anspruch 3, weiter umfassend einen zusätzlichen gewindegeschnittenen Abschnitt (39), der sich spiralförmig von dem Bohrabschnitt (33) hin zu dem ersten gewindegeschnittenen Abschnitt (34) erstreckt und sich zwischen dem vorderen gewindegeschnittenen Abschnitt (35) befindet, wobei der zusätzliche gewindegeschnittene Abschnitt (39) eine Spiralrichtung aufweist, die verschieden von einer Spiralrichtung des vorderen gewindegeschnittenen Abschnitts (35) ist.

8. Schraube (3) nach Anspruch 4, weiter umfassend einen zusätzlichen gewindegeschnittenen Abschnitt (39), der sich spiralförmig von dem Bohrabschnitt (33) hin zu dem ersten gewindegeschnittenen Abschnitt (34) erstrecktund sich zwischen dem vorderen gewindegeschnittenen Abschnitt (35) befindet, wobei der zusätzliche gewindegeschnittene Abschnitt (39) eine Spiralrichtung aufweist, die verschieden von einer Spiralrichtung des vorderen gewindegeschnittenen Abschnitts (35) ist, wobei zwei Enden der mindestens einen zusätzlichen Schneideeinheit (37) jeweils mit dem zweiten gewindegeschnittenen Abschnitt (38) und dem zusätzlichen gewindegeschnittenen Abschnitt (39) verbunden sind.

9. Schraube (3) nach Anspruch 1, wobei die mindestens eine Schneideeinheit (36) eine Positionierungswand (361) aufweist, die sich von dem Tal (321) nach oben erstreckt, und eine Führungswand (362), die mit der Positionierungswand (361) verbunden ist, wobei die Schneidekante (363) der mindestens einen Schneideeinheit (36) an einer Konvergenz der Positionierungswand (361) und der Führungswand (362) gebildet ist.

10. Schraube (3) nach Anspruch 9, wobei die Positionierungswand (361) eine vertikale Fläche aufweist, wobei die Führungswand (362) eine Fläche aufweist, die von der Schneidekante (363) zu dem Tal (321) geneigt ist.

11. Schraube (3) nach Anspruch 1, wobei der erste gewindegeschnittene Abschnitt (34) an einem ersten Ende (341) aufhört, wobei die vordere gewindegeschnittene Abschnitt (35) an einem zweiten Ende (351) aufhört, wobei die zwei Enden der mindestens einen Schneideeinheit (36) jeweils mit dem ersten Ende (341) und dem zweiten Ende (351) verbunden sind.

12. Schraube (3) nach Anspruch 8, wobei der zweite gewindegeschnittene Abschnitt (38) an einem dritten Ende (381) aufhört, wobei der zusätzlichegewindegeschnittene Abschnitt (39) an einem vierten Ende (391) aufhört, wobei die zwei Enden der mindestens einen zusätzlichen Schneideeinheit (37) jeweils mit dem dritten Ende (381) und dem vierten Ende (391) verbunden sind.

## Revendications

1. Vis (3) comprenant une tête (31), une tige (32) s'étendant vers le bas à partir de ladite tête (31), une partie de perçage (33) reliée à une extrémité de ladite tige (32) à l'opposé de ladite tête (31), et une première section filetée (34) formée en spirale autour de ladite tige (32) ;
**caractérisée par le fait qu'**une section filetée avant (35) s'étend en spirale à partir de ladite partie de perçage (33) vers ladite première section filetée (34), ladite première section filetée (34) et ladite section filetée avant (35) étant espacées l'une de l'autre pour former un creux (321) entre ladite première section filetée (34) et ladite section filetée avant (35), au moins une unité de coupe (36) faisant saillie à partir dudit creux (321), ladite au moins une unité de coupe (36) ayant un bord de coupe (363) à une hauteur de saillie (36d) de celle-ci, deux extrémités de ladite au moins une unité de coupe (36) étant reliées respectivement à ladite première section filetée (34) et à ladite section filetée avant (35), ladite hauteur de saillie (36d) de ladite au moins une unité de coupe (36) étant inférieure à une distance (34d) définie de ladite tige (32) à un bord le plus à l'extérieur de ladite première section filetée (34).

2. Vis (3) selon la revendication 1, comprenant en outre au moins une unité de coupe auxiliaire (37) faisant saillie à partir dudit creux (321).

3. Vis (3) selon la revendication 1, comprenant en outre une seconde section filetée (38) disposée en spirale sur ladite tige (32) et située entre ladite première section filetée (34), ladite seconde section filetée (38) ayant une direction d'hélice différente d'une direction d'hélice de ladite première section filetée (34).

4. Vis (3) selon la revendication 2, comprenant en outre une seconde section filetée (38) disposée en spirale sur ladite tige (32) et située entre ladite première section filetée (34), ladite seconde section filetée (38) ayant une direction d'hélice différente d'une direction d'hélice de ladite première section filetée (34), ladite seconde section filetée (38) étant reliée à ladite au moins une unité de coupe auxiliaire (37).

5. Vis (3) selon la revendication 1, comprenant en outre une section filetée auxiliaire (39) s'étendant en spirale à partir de ladite partie de perçage (33) vers ladite première section filetée (34) et située entre ladite section filetée avant (35), ladite section filetée auxiliaire (39) ayant une direction d'hélice différente d'une direction d'hélice de ladite section filetée avant (35) .

6. Vis (3) selon la revendication 2, comprenant en outre une section filetée auxiliaire (39) s'étendant en spirale à partir de ladite partie de perçage (33) vers ladite première section filetée (34) et située entre ladite section filetée avant (35), ladite section filetée auxiliaire (39) ayant une direction d'hélice différente d'une direction d'hélice de ladite section filetée avant (35), ladite section filetée auxiliaire (39) étant reliée à ladite au moins une unité de coupe auxiliaire (37).

7. Vis (3) selon la revendication 3, comprenant en outre une section filetée auxiliaire (39) s'étendant en spirale à partir de ladite partie de perçage (33) vers ladite première section filetée (34) et située entre ladite section filetée avant (35), ladite section filetée auxiliaire (39) ayant une direction d'hélice différente d'une direction d'hélice de ladite section filetée avant (35) .

8. Vis (3) selon la revendication 4, comprenant en outre une section filetée auxiliaire (39) s'étendant en spirale à partir de ladite partie de perçage (33) vers ladite première section filetée (34) et située entre ladite section filetée avant (35), ladite section filetée auxiliaire (39) ayant une direction d'hélice différente d'une direction d'hélice de ladite section filetée avant (35), deux extrémités de ladite au moins une unité de coupe auxiliaire (37) étant reliées respectivement à ladite seconde section filetée (38) et à ladite section filetée auxiliaire (39).

9. Vis (3) selon la revendication 1, dans laquelle ladite au moins une unité de coupe (36) a une paroi de positionnement (361) s'étendant vers le haut à partir dudit creux (321) et une paroi de guidage (362) reliée à ladite paroi de positionnement (361), ledit bord de coupe (363) de ladite au moins une unité de coupe (36) étant formé à une convergence de ladite paroi de positionnement (361) et de ladite paroi de guidage (362).

10. Vis (3) selon la revendication 9, dans laquelle ladite paroi de positionnement (361) a une surface verticale, ladite paroi de guidage (362) ayant une surface s'inclinant dudit bord de coupe (363) audit creux (321).

11. Vis (3) selon la revendication 1, dans laquelle ladite première section filetée (34) se termine à une première extrémité (341), ladite section filetée avant (35) se terminant à une seconde extrémité (351), lesdites deux extrémités de ladite au moins une unité de coupe (36) étant reliées respectivement à ladite première extrémité (341) et à ladite seconde extrémité (351).

12. Vis (3) selon la revendication 8, dans laquelle ladite seconde section filetée (38) se termine à une troisième extrémité (381), ladite section filetée auxiliaire (39) se terminant à une quatrième extrémité (391), lesdites deux extrémités de ladite au moins une unité de coupe auxiliaire (37) étant reliées respectivement à ladite troisième extrémité (381) et à ladite quatrième extrémité (391).
